# EUROPÄISCHE PATENTSCHRIFT

(11) **EP 3 488 286 B1**
(45) Veröffentlichungstag und Bekanntmachung des Hinweises auf die Patenterteilung: **05.08.2020**
(21) Anmeldenummer: 17739844.3
(22) Anmeldetag: 29.06.2017
(51) Int. Cl.: G02C 5/22

(54) **FEDERSCHARNIER FÜR EINE BRILLE**
SPRING HINGE FOR A PAIR OF SPECTACLES
CHARNIÈRE À RESSORT POUR LUNETTES

(30) Priorität: 20.07.2016 AT 506592016
(43) Veröffentlichungstag der Anmeldung: 29.05.2019
(73) Patentinhaber: Redtenbacher Präzisionsteile Ges. M.B.H., 4644 Scharnstein (AT)
(72) Erfinder: BUCHEGGER, Harald, 4817 St. Konrad (AT)
(74) Vertreter: Hübscher & Partner Patentanwälte GmbH
(86) Internationale Anmeldenummer: PCT/AT2017/050017
(87) Internationale Veröffentlichungsnummer: WO 2018/014056

(56) Entgegenhaltungen:
- DE-A1- 2 948 113
- FR-A1- 3 001 052
- US-A- 6 152 562
- US-B1- 6 381 807

## Beschreibung

### Technisches Gebiet

Die Erfindung bezieht sich auf ein Federscharnier für eine Brille mit einem in einer Scharniergabel eines ersten Scharnierteils gelagerten, mittigen Scharnierlappen eines zweiten Scharnierteils am Ende eines Schafts und mit einem vom Schaft durchsetzten, auf dem Schaft gegen Federkraft verschiebbaren Anschlag für das erste Scharnierteil.

Bei üblichen Federscharnieren für Brillen ist ein am Brillenbügel zu befestigendes Gehäuse vorgesehen, in dem ein Gleitstück mit dem bügelseitigen Scharnierteil gegen Federkraft verschiebbar gelagert ist, sodass das aus dem Gehäuse vorstehende bügelseitige Scharnierteil gegenüber dem Gehäuse verlagert werden kann, wenn das brillenseitige Scharnierteil, das mit dem bügelseitigen Scharnierteil scharnierartig verbunden ist, beispielsweise aus einer in der Strecklage des Brillenbügels gegebenen Anschlaglage am Gehäuse gegenüber dem Gehäuse um die Scharnierachse gedreht wird. Um die mit solchen Federscharnieren verbundenen Nachteile hinsichtlich der Verbindung des Gehäuses mit dem Brillenbügel zu vermeiden, ist es bekannt (US 6 152 562 A), nicht das bügelseitige Scharnierteil in einem bügelfesten Gehäuse verschiebbar zu lagern, sondern dem brillenseitigen, ersten Scharnierteil einen gegen Federkraft verschiebbaren Anschlag zuzuordnen. Zu diesem Zweck ist das einen mittigen Scharnierlappen bildende, bügelseitige, zweite Scharnierteil am Ende eines Bügelschafts angeordnet, auf dem der Anschlag gegen die Kraft einer den Schaft umschließenden Schraubenfeder verschiebbar geführt wird. Diese Schraubenfeder stützt sich einerseits an der dem bügelseitigen Scharnierteil abgekehrten Stirnseite des Anschlags und anderseits an einer Ringschulter eines die Schraubenfeder und einen Abschnitt des Anschlags umschließenden Gehäuses ab, das mit dem Bügelschaft verschiebefest verbunden ist. Nachteilig ist allerdings, dass wegen des über den Bügelschaft radial vorstehenden Scharnierlappens der mit einer Durchtrittsöffnung für den Bügelschaft versehene Anschlag, die Schraubenfeder und das die Schraubenfeder aufnehmende Gehäuse nur vom dem Scharnierlappen gegenüberliegenden Ende auf den Bügelschaft aufgeschoben werden können, was eine nachträgliche Verbindung zwischen dem Gehäuse und dem Bügelschaft in Form einer auf den Bügelschaft schnappverschlussartig aufsteckbaren Anschlaghülse für das Gehäuse erfordert.

### Darstellung der Erfindung

Der Erfindung liegt somit die Aufgabe zugrunde, ein Federscharnier für Brillen so auszugestalten, dass es keiner verschiebefesten Verbindung zwischen einem Federgehäuse und dem dem Federgehäuse zugehörigen Brillenteil bedarf und dass die Montage des Federscharniers ausschließlich vom scharnierseitigen Ende des jeweiligen Brillenteils aus möglich ist.

Ausgehend von einem Federscharnier der eingangs geschilderten Art löst die Erfindung die gestellte Aufgabe dadurch, dass der Schaft mit dem endseitigen Scharnierlappen einen durch seitliche Schultern abgesetzten Steg ausbildet und dass der über den mittigen Scharnierlappen auf den Steg aufgeschobene Anschlag auf der vom Scharnierlappen abgekehrten Stirnseite beidseits des Stegs je eine sacklochartige Aufnahme für zwei stegparallele Schraubenfedern aufweist, die sich an den Schultern abstützen.

Da zufolge dieser Maßnahmen die durch den abgesetzten Steg beidseits dieses Stegs gebildeten Schultern des Schafts als Abstützung für die beiden stegparallelen Schraubenfedern genützt werden, entfällt hierfür ein mit dem jeweiligen Brillenteil, nämlich dem Brillenbügel oder dem Brillengestell, zu verbindendes Gehäuse. Wegen des an seinem Ende den mittigen Scharnierlappen ausbildenden Stegs kann der Anschlag mit den Schraubenfedern in den sacklochartigen Aufnahmen vom scharnierseitigen Ende auf den Steg aufgeschoben werden, bevor der mittige Scharnierlappen unter einer Vorspannung der beiden Schraubenfedern mit der Scharniergabel des ersten Scharnierteils mithilfe einer Scharnierachse verbunden wird. Der Anschlag wird somit unter einer federnden Vorspannung an das einen Gegenanschlag bildende, erste Scharnierteil angedrückt gehalten, um beim Überstrecken des Brillenbügels oder seinem Verschwenken aus durch Anschlagflächen des Gegenanschlags bestimmten Streck- und Schließstellungen durch den Gegenanschlag entgegen der Kraft der beiden Schraubenfedern auf dem Steg verlagert zu werden. Mit den beiden seitlich neben dem Steg verlaufenden Schraubenfedern entfällt die Notwendigkeit, eine den Steg umschließende Schraubenfeder vorzusehen, was eine kompakte Anordnung der Schraubenfedern innerhalb der Querschnittsform des Brillenbügels erlaubt.

Weist der Anschlag auf der vom Scharnierlappen abgekehrten Stirnseite einen den Brillenbügel im Schulterbereich des Schafts umschließenden Rand auf, dessen Höhe zumindest dem um den maximalen Federweg des Anschlags vermehrten Schulterübergriff entspricht, so bleiben die beiden Schraubenfedern unabhängig von der Verstellung des Anschlags abgedeckt, wobei der Anschlag vorteilhaft als vielfältig gestaltbares Dekorationselement genützt werden kann.

### Kurze Beschreibung der Zeichnung

In der Zeichnung ist der Erfindungsgegenstand beispielsweise dargestellt. Es zeigen
- Fig. 1: ein erfindungsgemäßes Federscharnier für eine Brille in einem schematischen, zur Scharnierachse senkrechten Längsschnitt,
- Fig. 2: dieses Federscharnier in einem Schnitt nach der Linie II-II der Fig. 1
- Fig. 3: einen Schnitt nach der Linie III-III der Fig. 1,
- Fig. 4: eine zum Teil aufgerissene Ansicht des Federscharniers in Richtung der Scharnierachse in einer Zwischenstellung zwischen der Streck- und der Schließstellung,
- Fig. 5: eine der Fig. 1 entsprechende Darstellung einer Konstruktionsvariante eines erfindungsgemäßen Federscharniers und
- Fig. 6: einen Schnitt nach der Linie VI-VI der Fig. 5.

### Weg zur Ausführung der Erfindung

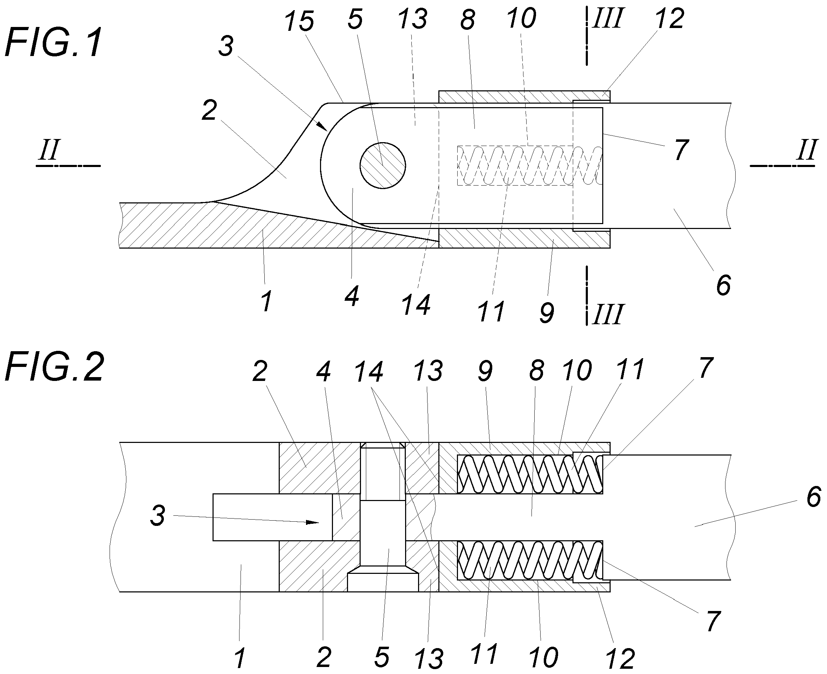

Das in den Fig. 1 bis 4 dargestellte Federscharnier weist ein brillenseitiges, erstes Scharnierteil 1 in Form einer Scharniergabel 2 und ein bügelseitiges, zweites Scharnierteil 3 mit einem mittigen Scharnierlappen 4 auf, der in der Scharniergabel 2 mittels einer Scharnierachse 5 drehbar gehalten wird. Der mittige Scharnierlappen 4 wird durch das vordere Ende eines vom Schaft 6 eines Brillenbügels durch seitliche Schultern 7 abgesetzten, durchgehenden Steg 8 gebildet, der im dargestellten Ausführungsbeispiel durch eine beidseitige Abflachung eines im Querschnitt kreisförmigen Abschnitt des Schafts 6 erhalten wird, was jedoch keinesfalls zwingend ist, weil der Schaft 6 auch im Bereich der Schultern 7 unterschiedliche Querschnittsformen aufweisen kann. Entscheidend ist, dass auf dem Steg 8 ein Anschlag 9 verschiebbar gelagert ist, der über den mittigen Scharnierlappen 4 auf den Steg 8 aufgeschoben wird und mit beidseits des Stegs 8 angeordneten, sacklochartigen Aufnahmen 10 für zwei stegparallele Schraubenfedern 11 versehen ist, die sich an den Schultern 7 des Schafts 6 axial abstützen. Der Anschlag 9 ist mit einem axial abstehenden Rand 12 versehen, der den Schulterbereich des Schafts 6 umschließt, sodass die beiden Schraubenfedern 11 vom Anschlag 9 vollständig abgedeckt werden.

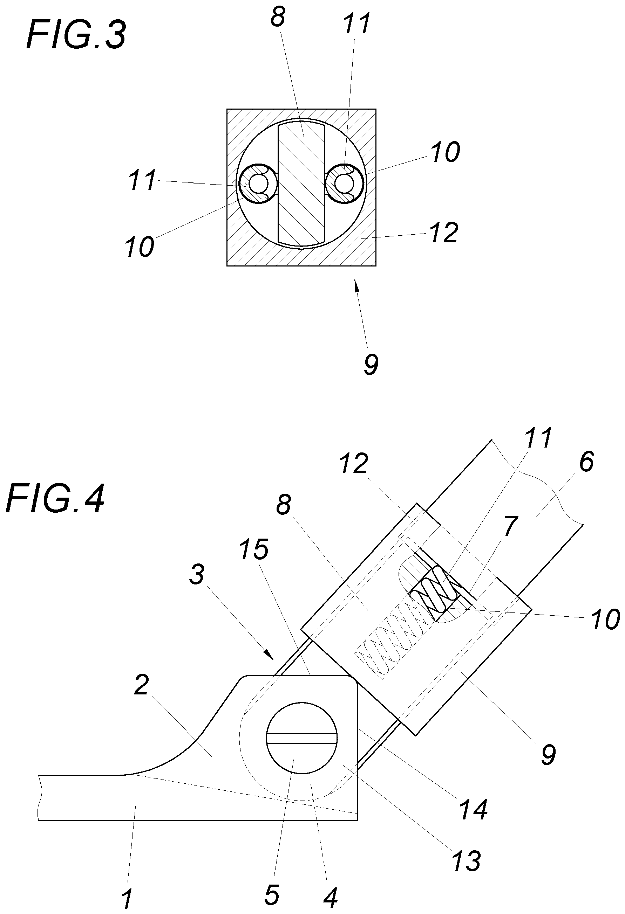

Das brillenseitige, erste Scharnierteil 1 bildet mit seiner Scharniergabel 2 einen Gegenanschlag 13 mit zwei Anschlagflächen 14, 15 für den Anschlag 9. Mit der Anlage des Anschlags 9 an der Anschlagfläche 14 des Gegenanschlags 13 wird die Streckstellung und mit der Anlage an der Anschlagfläche 15 die eingeschwenkte Schließstellung des Brillenbügels vorgegeben. Wie insbesondere der Fig. 4 entnommen werden kann, ist zum Übergang zwischen diesen beiden Bügelstellungen der Anschlag 9 auf dem Steg 8 gegen die Kraft der Schraubenfedern 11 durch das brillenseitige, erste Scharnierteil 1 zu verlagern. Der hierfür erforderliche Federweg ist durch die Höhe des Randstegs 12 zu berücksichtigen. Die Höhe des Randstegs muss somit zumindest der Summe aus dem maximalen Federweg des Anschlags 9 und der Länge des kleinsten Schulterübergriffs entsprechen.

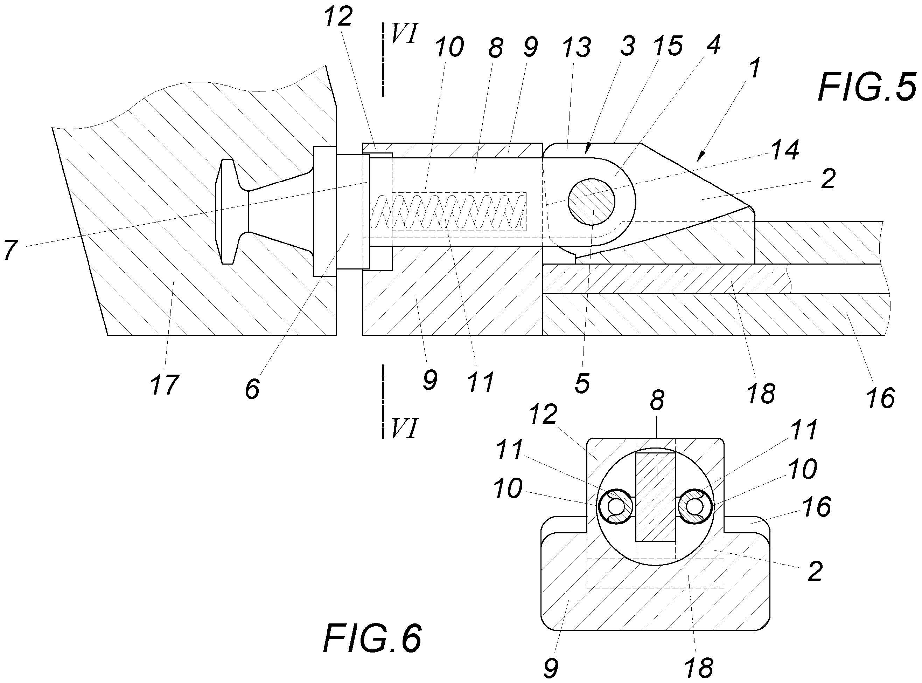

Zum Unterschied zur Ausführungsform nach den Fig. 1 bis 4 ist nach den Fig. 5 und 6 das erste Scharnierteil 1 mit der Scharniergabel 2 einem Brillenbügel 16 zugeordnet, während das zweite Scharnierteil 3 mit dem mittigen Scharnierlappen 4 mit einem Brillengestell 17 verbunden ist. Der mittige Scharnierlappen 4 dieses zweiten Scharnierteils 3 ist wiederum am Ende eines Stegs 8 ausgebildet, der gegenüber einem im Brillengestell 17 verankerten Schaft 6 durch Schultern 7 abgesetzt ist. Wie beim Ausführungsbeispiel nach den Fig. 1 bis 4 ist auf dem Steg 8 ein Anschlag 9 verschiebbar gelagert, der mit sacklochartigen Aufnahmen 10 für zwei stegparallele Schraubenfedern 11 beidseits des Stegs 8 versehen ist. Diese Schraubenfedern 11 stützen sich einerseits am Grund der sacklochartigen Aufnahmen 10 und anderseits an den Schultern 7 des Schafts 6 axial ab.

Das bügelseitige, erste Scharnierteil 1, das auf einer Einlage 18 des Brillenbügels 16 aufgelötet ist, bildet mit seiner Scharniergabel 2 einen Gegenanschlag 13 für den Anschlag 9 wiederum mit zwei Anschlagflächen 14, 15 für die Streckstellung und die eingeschwenkte Schließstellung des Brillenbügels 16. Zum Übergang zwischen diesen beiden Bügelstellungen muss der Anschlag 9 auf dem Steg 8 gegen die Kraft der Schraubenfedern 11 durch das bügelseitige, erste Scharnierteil 1 verlagert werden.

## Patentansprüche

1. Federscharnier für eine Brille mit einem ersten und einem zweiten Scharnierteil (1, 3), mit einem in einer Scharniergabel (2) des ersten Scharnierteils (1) gelagerten, mittigen Scharnierlappen (4) des zweiten Scharnierteils (3) am Ende eines Schafts (6) und mit einem vom Schaft (6) eines Brillenbügels durchsetzten, auf dem Schaft (6) gegen Federkraft verschiebbaren Anschlag (9) für das erste Scharnierteil (1), **dadurch gekennzeichnet, dass** der Schaft (6) mit dem endseitigen Scharnierlappen (4) einen durch seitliche Schultern (7) abgesetzten Steg (8) ausbildet und dass der über den mittigen Scharnierlappen (4) auf den Steg (8) aufgeschobene Anschlag (9) auf der vom Scharnierlappen (4) abgekehrten Stirnseite beidseits des Stegs (8) je eine sacklochartige Aufnahme (10) für zwei stegparallele Schraubenfedern (11) aufweist, die sich an den Schultern (7) abstützen.

2. Federscharnier nach Anspruch 1, **dadurch gekennzeichnet, dass** der Anschlag (9) auf der vom Scharnierlappen (4) abgekehrten Stirnseite einen den Schulterbereich des Schafts (6) umschließenden Rand (12) aufweist, dessen Höhe zumindest dem um den maximalen Federweg des Anschlags (9) vermehrten Schulterübergriff entspricht.

## Claims

1. Spring hinge for eyeglasses having a first and a second hinge part (1, 3), having a central hinge plate (4) of the second hinge part (3) - said hinge plate being mounted in a hinge fork (2) of the first hinge part (1) - on the end of a shaft (6) and having a stop (9) for the first hinge part (1), said stop having the shaft (6) of a temple passing through it and being displaceable on the shaft (6) against a spring force, **characterised in that**, with the end-side hinge plate (4), the shaft (6) forms a web (8) which is stepped by lateral shoulders (7), and **in that** the stop (9) which is slid onto the web (8) over the central hinge plate (4) has, on the end side remote from the hinge plate (4), on both sides of the web (8), in each case a blind hole-like receiver (10) for the two helical springs (11) in parallel with the web which bear against the shoulders (7).

2. Spring hinge as claimed in claim 1, **characterised in that** the stop (9) has, on the end side remote from the hinge plate (4), an edge (12) which surrounds the shoulder region of the shaft (6) and of which the height corresponds at least to the shoulder overlap which is increased by the maximum spring deflection of the stop (9).

## Revendications

1. Charnière à ressort pour lunettes comprenant une première partie et une deuxième partie de charnière (1, 3), dans laquelle une patte de charnière centrale (4) de la deuxième partie de charnière (3) est supportée dans une fourche de charnière (2) de la première partie de charnière (1) à l'extrémité d'une tige (6) et présentant une butée (9) traversée par la tige (6) d'une monture de lunette et déplaçable sur la tige (6) contre une force de ressort, pour la première partie de charnière (1), **caractérisée en ce que** la tige (6) forme avec la patte de charnière en extrémité (4) une nervure (8) déportée par des épaulements latéraux (7), et **en ce que** la butée (9) glissée sur la nervure (8) au moyen de la patte de charnière centrale (4) présente sur le côté frontal détourné de la patte de charnière (4) de part et d'autre de la nervure (8) chaque fois un logement en forme de trou borgne (10) pour deux ressorts hélicoïdaux (11) parallèles à la nervure, qui prennent appui sur les épaulements (7).

2. Charnière à ressort selon la revendication 1, **caractérisée en ce que** la butée (9) présente sur le côté frontal détourné de la patte de charnière (4) un bord (12) qui entoure la zone d'épaulements de la tige (6), dont la hauteur correspond au moins au dépassement d'épaulement augmenté de la course de ressort maximale de la butée (9).
